# EUROPEAN PATENT SPECIFICATION

(11) **EP 2 629 227 B1**
(45) Date of publication and mention of the grant of the patent: **27.04.2016**
(21) Application number: 12155659.1
(22) Date of filing: 15.02.2012
(51) Int. Cl.: G06F 21/31, G06F 21/45

(54) **Key management on device for perimeters**
Schlüsselverwaltung auf Vorrichtung für Umfänge
Gestion de clés sur dispositif de périmètres

(43) Date of publication of application: 21.08.2013
(73) Proprietor: BlackBerry Limited, Waterloo, ON N2K 0A7 (CA); 2236008 Ontario Inc., Waterloo, ON N2K 0A7 (CA)
(72) Inventor: Nagarajan, Sivakumar, Kanata, Ontario K2K OB3 (CA); Dikic, Srdan, Waterloo, Ontario N2L 3W8 (CA); McConnaughay, Mark A., Waterloo, Ontario N2L 3W8 (CA); Bender, Christopher Lyle, Waterloo, Ontario N2L 3W8 (CA); Bozsitz, Marius Calin, Waterloo, Ontario N2L 3W8 (CA)
(74) Representative: Moore, Barry

(56) References cited:
- WO-A2-2005/045550
- US-B1- 6 360 322
- US-B1- 6 978 385
- ANONYMOUS: 'Key derivation function', [Online] 10 May 2011, XP055086115 Retrieved from the Internet: <URL:http://en.wikipedia.org/w/index.php?ti tle=Special:Book&bookcmd=download&collectio n_id=ce6d048d600fd53d&writer=rl&return_to=K ey derivation function> [retrieved on 2013-10-30]
- ANONYMOUS: 'Key generation', [Online] 23 December 2009, XP055086146 Retrieved from the Internet: <URL:http://en.wikipedia.org/w/index.php?ti tle=Special:Book&bookcmd=download&collectio n_id=d8f164ff9e95113e&writer=rl&return_to=K ey generation> [retrieved on 2013-10-30]

## Description

### FIELD OF THE DISCLOSURE

The present disclosure relates to key and password management for computing devices in general, and in particular to key and password management for devices comprising encrypted perimeters.

### BACKGROUND

Many computing devices, whether they are desktop computers or mobile devices, make extensive use of passwords to protect sensitive information and to control access to secure resources. The password may be used to control access to the device by, for example, restricting access to applications on the device until the password is correctly entered. In addition, the password may be used as part of an encryption algorithm to encrypt data on the device.

Typically, an end-user may be prompted for a password. However there are cases where a password may be lost, forgotten or compromised, or in the case of a mobile device, the device itself may be lost.

In some cases, a password may be provided to and stored on a server, which may then allow the password to be retrieved. However, in other situations it is undesirable, for security reasons, to store an unencrypted version of the password or to provide the password to the server.

In cases involving devices with encrypted perimeters having an encryption key derived from a password, a lost or forgotten password prevents data on the computing device from being retrieved. Moreover, in some cases and for security reasons, the plain-text password is not stored on the device, meaning that it is technically impossible for the computing device to perform any tasks involving the encrypted data without the password.

U.S. Patent No. 6,360,322 to Grawrock teaches a system whereby a user may regain access to encrypted data. Grawrock teaches that the data encryption key is encrypted using a public key of a public/private key pair. The private key is then encrypted using an access key, which is generated from a random number generator. The access key is then encrypted using a password hash, and may also be decrypted later using the same password hash. The access key is further encrypted using a "one time" public key. The "one time" private key corresponding to the "one time" private key is held in a remote secure location. Therefore, if the access key cannot be decrypted by the password hash, because the user has forgotten its password, the access key can be decrypted using the "one time" private key which is retrieved from the remote secure location following an authentication of the user.

WO 2005/045550 to Parsons discloses a system in which encrypted data of a first computer can be recovered from encrypted recovery data. The encrypted recovery data is sent to a second computer which is capable of decrypting the encrypted recovery data, upon authentication of the user by a remote storage facility.

US 6,978,385 to Cheston et al. discloses a system whereby a forgotten password is recovered from a server upon the user correctly answering verification questions.

### SUMMARY

The present disclosure provides a method, at a computing device, for enabling recovery of an encryption key in accordance with claim 1. Advantageous features are defined in the dependent claims.

The present disclosure further provides a method, at a server in accordance with claim 8. Advantageous features are defined in the dependent claims.

The present disclosure further provides a computing device in accordance with claim 14.

The present disclosure further provides a server in accordance with claim 15.

### BRIEF DESCRIPTION OF THE DRAWINGS

Embodiments of the present disclosure will now be described, by way of example only, with reference to the attached figures, wherein:
**Figure 1** is a block diagram illustrating a mobile device and server in accordance with at least one embodiment of the present disclosure;
**Figure 2** is a block diagram of an example network architecture;
**Figure 3** is a flow chart of a process for creating and storing an encrypted PKDF value according to at least one embodiment of the present disclosure;
**Figure 4** is a flow chart of a process for resetting a password or managing a device according to at least one embodiment of the present disclosure;
**Figure 5** is a data flow diagram showing communications between various logical entities according to at least one embodiment of the present disclosure; and
**Figure 6** is a block diagram illustrating a mobile device that can be configured to implement the solutions of the present disclosure.

### DETAILED DESCRIPTION

The present disclosure describes various methods, systems, and devices in relation to a particular environment. However, the methods, systems and devices described herein are applicable to other environments, and the present disclosure is not limited to any particular environment.

Thus, in at least one embodiment, the present disclosure relates to an environment with a mobile device comprising an encryption perimeter and a communication subsystem. The mobile device can be a cellular telephone with data capabilities, i.e., a "smart phone", a tablet, a laptop computer, or the like.

The encryption perimeter refers to data stored on the mobile device in encrypted form, using an encryption key. Broadly, there are two categories of key management for encryption perimeters: Local Key and Non-Local Key.

In the case of the Local Key, the encryption key for the encryption perimeter is typically computed from information residing on the mobile device, which allows the computing device to recreate the key. This information is stored on the device outside the encryption perimeter. A password is used to validate a user, where a hash of a password entered is compared with a stored hash of the correct password (the user password itself is not stored on the device). Once the user has been validated, the key specific to the perimeter is retrieved from a secure key store on the device. This key is then sent through a series of cryptographic hash iterations to generate an intermediate key for the encrypted perimeter. The intermediate key is then mixed in cryptographically with the device specific random data to generate the actual encryption key used to unlock the perimeter, to allow access to the data in the encrypted perimeter.

A more secure solution than the Local Key scheme is the Non-Local Key scheme. According to the Non-Local Key scheme, there is never sufficient information stored on the device, and specifically outside of the encryption perimeter, to recreate the key. For example, in a device implementing the Non-Local Key scheme, the encryption key may be derived from the user-entered password and a key generating function. Thus without the user-entered password, the device cannot recreate the key even if the device has access to the key generating function. In such a scenario, if the user loses his password, the data within the encryption perimeter is completely inaccessible. In accordance with the non-local key, once the user is validated, as with the above local key scenario, the user supplied password is sent through a series of cryptographic hash iterations to generate an intermediate key for the encrypted perimeter. This intermediate key is then mixed in cryptographically with device specific random data to generate the actual encryption key used to unlock the perimeter, to allow access to the data in the encrypted perimeter.

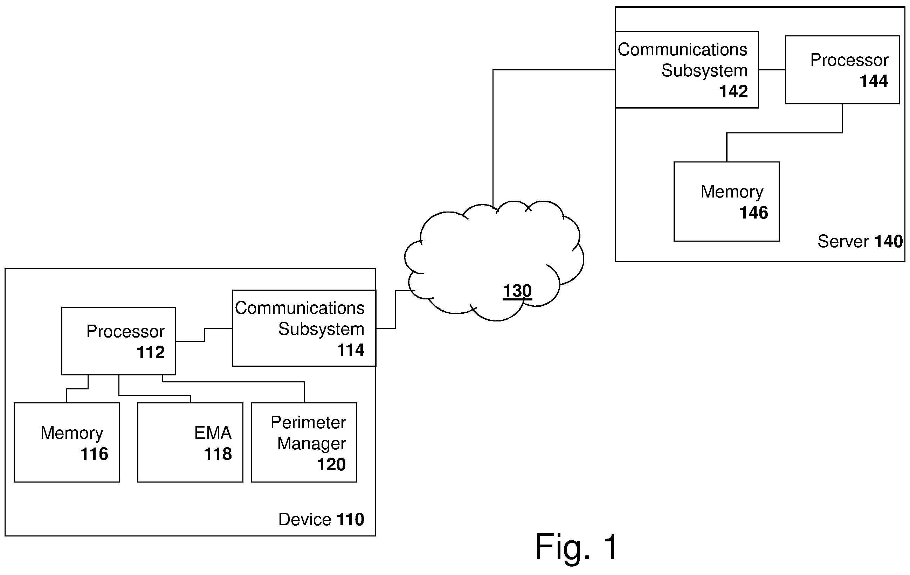

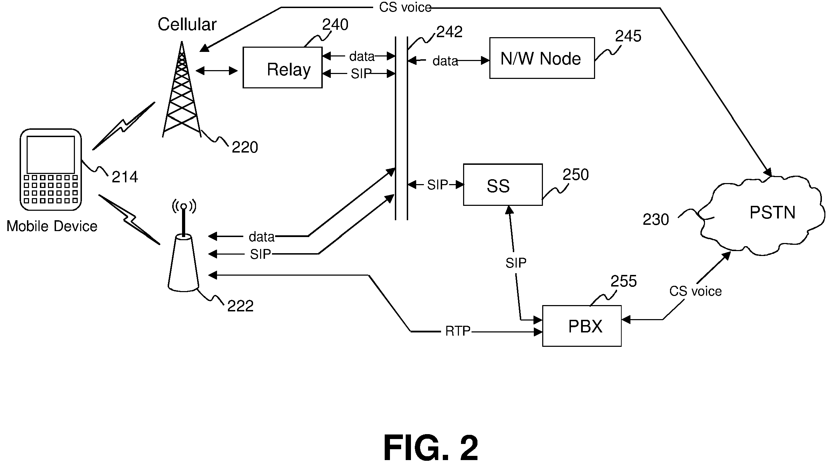

Reference is now made to **Figures 1** and **2****.** **Figure 1** illustrates a simplified architecture for the embodiments of the present disclosure. In particular, a device **110** includes a processor **112** and a communications subsystem **114.** Device **110** may be any computing device, including a desktop computer, portable computer, laptop, mobile device, tablet, gaming console, among others.

The mobile device **110** communicates with a server **140,** for example through a network **130.** Network **130** could be any wide area or local area network. In other embodiments device **110** may connect directly to server **140** and not use a network **130.**

Server **140** includes a communications subsystem **132,** a processor **144** and memory **146** in the example of **Figure 1****.**

Depending on the network 130, communications subsystems **114** and **142** could be any wired or wireless system.

As described below, device **110** further includes two modules, namely an Enterprise Management Agent (EMA) **118** and a perimeter manager **120.** The EMA **118** is a software module which can communicate with a perimeter manager **120** on the device and with server **140** through communications subsystem **114.**

One exemplary environment for the embodiment of Figure 1 is shown with regards to **Figure 2. Figure 2** illustrates an architectural overview for a mobile network having voice and data.

Device **110** from **Figure 1** may be mobile device **214,** which in the example of **Figure 2** comprises a dual-mode mobile device that communicates both with a cellular network **220** and a data access point **222.** In other examples mobile device **214** may communicate with only one of cellular network **220** or data access point **222.**

Mobile device **214** may connect through cellular network **220** to provide either voice or data services. As will be appreciated, various cellular networks exist including, but not limited to, Global System for Mobile Communications (GSM), General Packet Radio Service (GPRS), Code Division Multiple Access (CDMA), Universal Mobile Telecommunications System (UMTS), Long Term Evolution (LTE), Long Term Evolution Advanced (LTE-A), Wideband Code Division Multiple Access (WCDMA), among others. These technologies allow the use of voice, data or both at one time.

A circuit switched call, as seen from **Figure 2****,** will proceed through a circuit switched voice channel to Public Switched Telephone Network (PSTN) **230.**

Data proceeds through a relay **240,** and may, in some cases, proceed through a firewall **242** to one of several servers servicing the data call.

As seen in **Figure 2****,** data proceeds through the firewall **242** to a network node **245,** which may be server **140** from **Figure 1****.**

If the call is a transmission of voice over a data connection using VoIP, the data proceeds over session initiation protocol (SIP) to a SIP server **250.**

From SIP server **250,** the VoIP call proceeds over a private branch exchange (PBX) **255** and then becomes a circuit-switched voice call over PSTN **230.**

Mobile device **214** can further communicate over a data access point for a wireless local area network (WLAN). Examples of WLAN technologies include Wireless Fidelity (WiFi) or Worldwide Interoperability for Microwave Access (WiMax) as underlying technologies of wireless local area networks.

As with the cellular connection, data can be routed through firewall **242** to either the network node **245.**

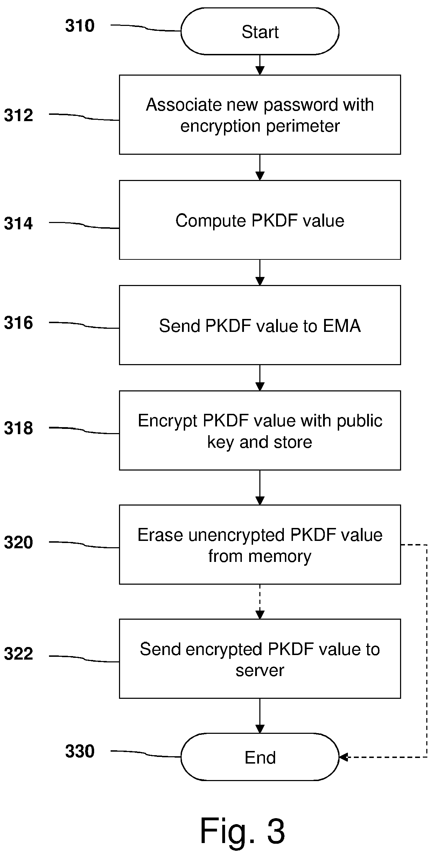

In order to permit a password to be reset if lost or forgotten, or in order to allow a server to perform certain functions such as policy changes on the device while the device is locked, the present disclosure provides for the encryption and secure storage of a password while still permitting retrieval and use. In particular, reference is now made to **Figure 3****,** which shows a process for encryption and storage of a new password.

The process of **Figure 3** starts at block **310** and proceeds to block **312,** in which a new password is associated with the encryption perimeter on the device. From block **312,** the process proceeds to block **314,** in which the perimeter manager **120** computes a Password Key Derivation Function (PKDF). The PKDF is any suitable function for deriving a key from a password which always provides the same output for the same input. In at least one embodiment, the PKDF is a one-way hash function.

The PKDF value does not necessarily correspond to the encryption key used for the encryption perimeter, although in at least one embodiment, it does. In other embodiments, the PDKF value acts as an intermediate value and is further combined with device specific random data to generate the actual encryption key. In at least one embodiment, the encryption key is produced by processing the PKDF value through a series of cryptographic hash iterations.

The process then proceeds to block **316,** in which the perimeter manager **120** then provides the PKDF value to the EMA **118** in a secure manner. After having communicated the PKDF value to the EMA **118,** the perimeter manager discards the PKDF value from its memory. For even greater security, the PKDF value is never stored in plaintext on persistent storage in at least one embodiment.

EMA **118** shares a encryption key with server **140.** In one embodiment, the encryption key is a public/private key pair in which the public key is known at the device **110** and the private key is known at server **140.** The public/private key pair is, in one embodiment, unique for the particular device **110,** and thus server **140** manages a public/private key pair for all devices under its management. As the server 140 may hold private keys for a number of devices, the private key may be associated to the device **110** through a device identifier.

The public-private encryption key pair may have been established at an earlier stage, such as during device activation. In other embodiments, the public-private encryption key pair is established when the EMA **118** establishes a connection with the server **140.** Other options are possible.

At block **318,** EMA **118** encrypts the PKDF value using the public key, and may store the encrypted value. The unencrypted PKDF value is then discarded and erased from the device memory at block **320.**

From block **320,** the device may optionally provide the encrypted PKDF value to the server, as seen in block **322.** In particular, at block **322,** the EMA **118** communicates the encrypted PKDF value to server **140** via a secure communication channel. In at least one embodiment, the secure communication channel may be established using a separate public and private key pair for communication between the device and server. Other options for secure communication are possible. Once the encrypted PKDF value is sent, the process proceeds from block **322** to block **330** and ends.

Alternatively, the encrypted PKDF value may be stored on the device and not communicated to the server until required for password recovery or for device changes. In this case, the process proceeds directly from block **320** to block **330** and ends.

At this stage, device **110** only possesses the encrypted PKDF value, as the unencrypted value has been erased from the memory of EMA **118,** as well as from the perimeter manager's memory. Therefore, in between sessions, the device's encryption perimeter may only be unlocked by recreating the encryption key from either the correct password, as entered by the user, or the encrypted PKDF value. Also, even if the EMA has maintained a copy of the encrypted PKDF value, it is incapable of decrypting the PKDF value as the EMA lacks the private key required for such decryption. Accordingly, in the absence of the password, the encryption key may only be recreated from a decrypted PKDF value received from the server.

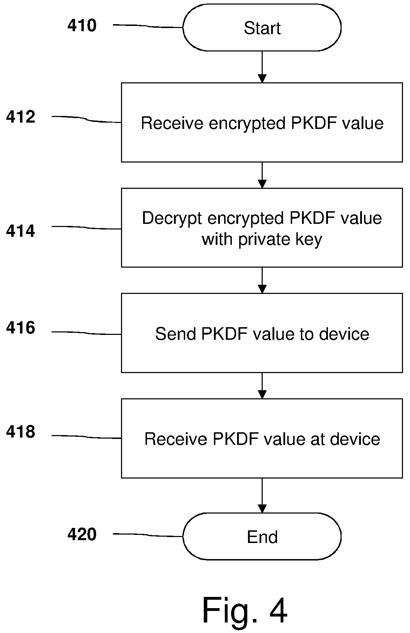

As indicated above, if a password is lost or forgotten, the password may need to be reset. In other cases, the server may need to manage the device, for example by changing policies on the device, provisioning software to the device, among other functionality. If a local key encryption policy is used, the management of the device can occur without knowledge of the password. However, in the case of a non-local key, the PKDF value is needed to manage the device. In either case, the server may proceed in accordance with the process of **Figure 4****.**

The process begins at block **410** and proceeds to block **412,** in which the server **140** receives the encrypted PKDF value. This may be a result of a password reset request, for example by a user contacting an administrator to reset the password. In other cases, server **140** needs to manage device 110. In one embodiment, the encrypted PKDF value is stored at the server. In another embodiment, the encrypted PKDF value is stored at device **110,** in which case a secure message to retrieve the encrypted PKDF value is sent from server **140** to device **110,** and the receipt of the encrypted PKDF value is shown at block **412.**

From block **412,** the process proceeds to block **414** in which the server **140** decrypts the encrypted PKDF value using the private key associated with device **110.** The decrypted PKDF value is then transmitted securely through a secure channel to the EMA **118** on device **110,** as shown at block **416.** In the case of password resetting, a new password may also be sent to device **110** at block **416.** In this case, the new password may be communicated through other channels securely to a user, generally once the user has been authenticated by the administrator.

For the communication at block **416,** in at least one embodiment, the secure channel is established using a separate public/private key pair already shared by the device **110** and the server **140.**

The EMA **118** receives the unencrypted PKDF value at block **418.** Once the EMA **118** is in possession of the unencrypted PKDF value, the EMA can securely pass the PKDF value to the perimeter manager **120.**

In at least one embodiment, in which the PKDF value corresponds to the encryption key, the process ends after block **418,** as shown by block **420,** as the perimeter manager is now in possession of the encryption key.

In other embodiments, the encryption key is produced by further processing the PKDF value, such as for example, a series of cryptographic hash iterations. In at least one embodiment, the PKDF value, or the PKDF value after a series of cryptographic hash iterations, is further transformed using device specific random data.

In this manner, the perimeter manager **120** can recreate the encryption key without the password, and unlock the encryption parameter even in the event that the user has lost his password. The new password is then provided to the device **110,** and the process of **Figure 3** is repeated with the new password.

The above method, device and system have been described with reference to a specific example. However, the present teachings can be adapted or modified while still remaining within the scope of the present disclosure.

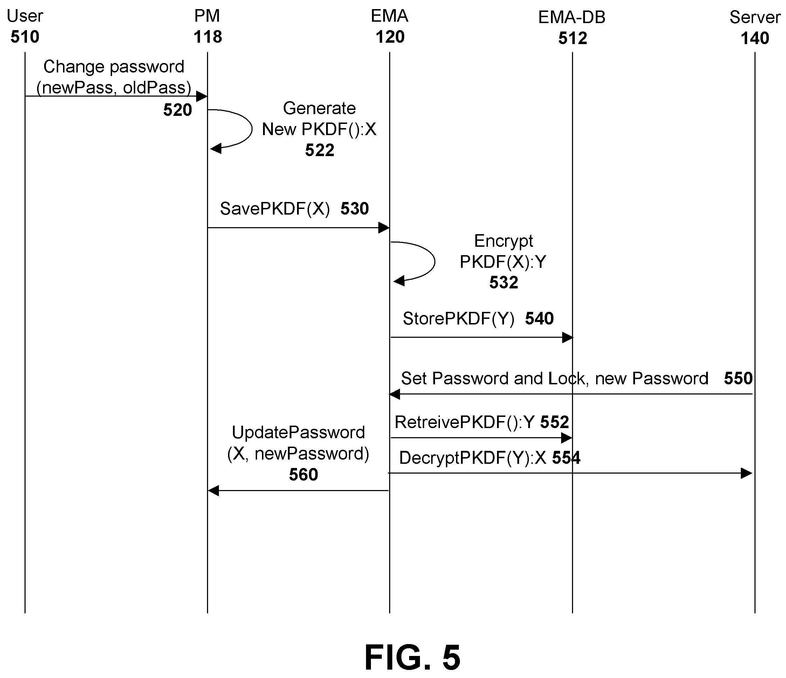

A flow diagram illustrating the communications between the various entities is shown with regard to **Figure 5****.**

In particular, when a user **510** wants to change a password, the user will typically log in to the device using the old password and through a password management application enter a new password. In some cases the old password must be provided as well. This is shown by message **520.**

The device, and in particular the PM **118** receives the password change request and if the old password is authenticated then the PM generates a new PKDF value "X", as shown by arrow **522.**

The PM **118** then securely communicates with EMA **120** to instruct EMA 120 to save PKDF (X), as shown by arrow **530.**

EMA **120** encrypts PKDF (X) with a public key, as described above, to produce an encrypted value "Y", as shown by arrow **532.**

EMA **120** may then store the encrypted PKDF in a database **512,** as shown by arrow **540.**

At a future date the password needs to be restored. In this case, server **140** will communicate with EMA **120** through a secure channel. The server **140** may provide a command to obtain the encrypted PKDF, as shown by arrow **550.** The EMA **120** retrieves the encrypted PKDF from database **512,** as shown by arrow **552** and then provides the encrypted PKDF to server **140** for decryption, as shown by arrow **554.**

The server **140** uses its private key to decrypt the encrypted PKDF and provides the unencrypted PKDF back to EMA **120.** EMA **120** may then use the unencrypted PKDF to generate the perimeter key to decrypt data and to further reset the password as described above and as shown by arrow **560.** The new password can then be used to create a new PKDF and the PKDF can be encrypted and stored in accordance with arrows **522, 530, 532** and **540.**

Based on the above, the password is never stored in the clear, nor is the intermediate PKDF value. The private key is required to decrypt the stored encrypted PKDF value and thus even if the device is compromised the data will remain secure.

The PKDF value is, in some embodiments, further hashed with values on the device, meaning that the server cannot derive the decryption key.

In the case of device management, the encrypted PKDF allows the server to change policies and provision without the need for user intervention to enter a password. It also allows for the server to change the policy from requiring a non-local key, to one that does not require a non-local key. System wide security policies could change at the enterprise. When a policy that allows a local key is delivered to the device, the non-local key is migrated to a local key on the device, publishing a new PKDF that is transmitted to EMA. It also allows for the enterprise to switch to a more secure policy, which requires a non-local key. When such a policy is delivered to the device, the software on the device immediately begins the process of migrating the local key to a non-local key on the device. This process requires the user to login to the device, (authenticate themselves) and then these credentials are used to migrate the existing local key to a non-local one. At the end of this migration step, a new PKDF value is published to EMA. In some embodiments, a non-local key is also referred to as a two factor encryption key

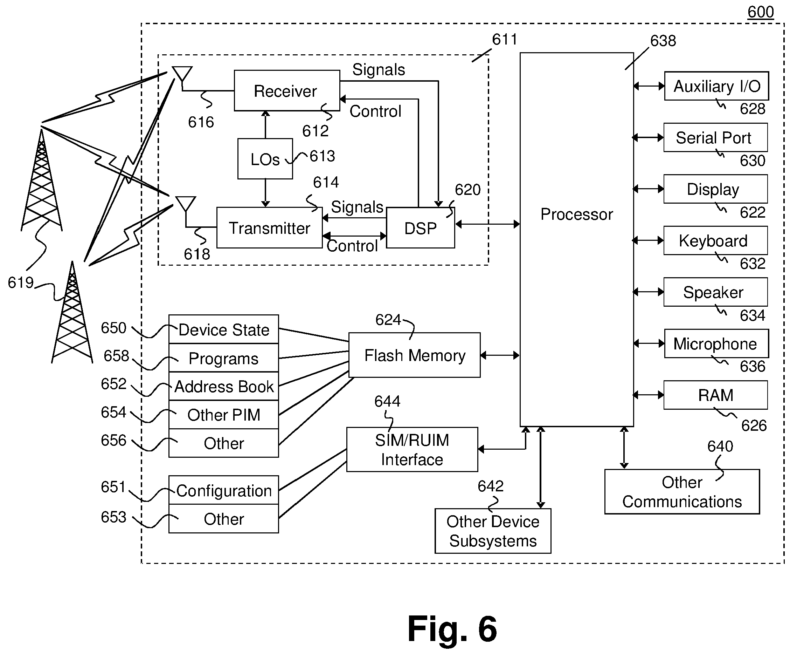

The above may be implemented by any device. If the above is implemented on a mobile device, one exemplary mobile device capable of implementing the above is shown with regard to **Figure 6****.**

Mobile device **600** is typically a two-way wireless communication device having data communication capabilities. Mobile device **600** generally has the capability to communicate with other computer systems on the Internet. Depending on the exact functionality provided, the mobile device may be referred to as a data messaging device, a wireless e-mail device, a cellular telephone with data messaging capabilities, a wireless Internet appliance, a wireless device, a mobile device, a game console, a tablet, or a data communication device, as examples.

Where mobile device **600** is enabled for two-way communication, it may incorporate a communication subsystem **611,** including both a receiver **612** and a transmitter **614,** as well as associated components such as one or more antenna elements **616** and **618,** local oscillators (LOs) **613,** and a processing module such as a digital signal processor (DSP) **620.** As will be apparent to those skilled in the field of communications, the particular design of the communication subsystem **611** will be dependent upon the communication network in which the device is intended to operate.

Network access requirements will also vary depending upon the type of network **619.** In some networks network access is associated with a subscriber or user of mobile device **600.** A mobile device may require a removable user identity module (RUIM) or a subscriber identity module (SIM) card. The SIM/RUIM interface **644** is normally similar to a card-slot into which a SIM/RUIM card can be inserted and ejected. The SIM/RUIM card can have memory and hold many key configurations **651,** and other information **653** such as identification, and subscriber related information.

When required network registration or activation procedures have been completed, mobile device **600** may send and receive communication signals over the network **619.** As illustrated in **Figure 6****,** network **619** can consist of multiple base stations communicating with the mobile device.

Signals received by antenna **616** through communication network **619** are input to receiver **612,** which may perform such common receiver functions as signal amplification, frequency down conversion, filtering, channel selection and the like. A/D conversion of a received signal allows more complex communication functions such as demodulation and decoding to be performed in the DSP **620.** In a similar manner, signals to be transmitted are processed, including modulation and encoding for example, by DSP **620** and input to transmitter **614** for digital to analog conversion, frequency up conversion, filtering, amplification and transmission over the communication network 619 via antenna **618.** DSP **620** not only processes communication signals, but also provides for receiver and transmitter control. For example, the gains applied to communication signals in receiver **612** and transmitter **614** may be adaptively controlled through automatic gain control algorithms implemented in DSP **620.**

Mobile device **600** generally includes a processor **638** which controls the overall operation of the device. Communication functions, including data and voice communications, are performed through communication subsystem **611.** Processor **638** also interacts with further device subsystems such as the display **622,** flash memory **624,** random access memory (RAM) **626,** auxiliary input/output (I/O) subsystems **628,** serial port **630,** one or more keyboards or keypads **632,** speaker **634,** microphone **636,** other communication subsystem **640** such as a short-range communications subsystem and any other device subsystems generally designated as **642.** Serial port **630** could include a USB port or other port known to those in the art.

Some of the subsystems shown in **Figure 6** perform communication-related functions, whereas other subsystems may provide "resident" or on-device functions. Notably, some subsystems, such as keyboard **632** and display **622,** for example, may be used for both communication-related functions, such as entering a text message for transmission over a communication network, and device-resident functions such as a calculator or task list.

Operating system software used by the processor **638** may be stored in a persistent store such as flash memory **624,** which may instead be a read-only memory (ROM) or similar storage element (not shown). Those skilled in the art will appreciate that the operating system, specific device applications, or parts thereof, may be temporarily loaded into a volatile memory such as RAM **626.** Received communication signals may also be stored in RAM **626.** Operating system software may include the PM and EMA modules described above.

As shown, flash memory **624** can be segregated into different areas for both computer programs **658** and program data storage **650, 652, 654** and **656.** These different storage types indicate that each program can allocate a portion of flash memory **624** for their own data storage requirements. Processor **638,** in addition to its operating system functions, may enable execution of software applications on the mobile device. A predetermined set of applications that control basic operations, including at least data and voice communication applications for example, will normally be installed on mobile device **600** during manufacturing. Other applications could be installed subsequently or dynamically.

Applications and software may be stored on any computer readable storage medium. The computer readable storage medium may be a tangible or in transitory/non-transitory medium such as optical (e.g., CD, DVD, etc.), magnetic (e.g., tape) or other memory known in the art.

One software application may be a personal information manager (PIM) application having the ability to organize and manage data items relating to the user of the mobile device such as, but not limited to, e-mail, calendar events, voice mails, appointments, and task items. Further applications may also be loaded onto the mobile device **600** through the network **619,** including games, social media applications, multi-media applications, among others. An auxiliary I/O subsystem **628,** serial port **630,** short-range communications subsystem **640** or any other suitable subsystem **642,** may be used, and the application installed by a user in the RAM **626** or a non-volatile store (not shown) for execution by the processor **638.** Such flexibility in application installation increases the functionality of the device and may provide enhanced on-device functions, communication-related functions, or both. For example, secure communication applications may enable electronic commerce functions and other such financial transactions to be performed using the mobile device **600.**

In a data communication mode, a received signal such as a text message or web page download will be processed by the communication subsystem **611** and input to the processor **638,** which may further process the received signal for output to the display **622,** or alternatively to an auxiliary I/O device **628.**

A user of mobile device **600** may also compose data items such as email messages for example, using the keyboard **632,** which may be a complete alphanumeric keyboard or telephone-type keypad, among others, in conjunction with the display **622** and possibly an auxiliary I/O device **628.** Such composed items may then be transmitted over a communication network through the communication subsystem **611.**

For voice communications, overall operation of mobile device 600 is similar, except that received signals would typically be output to a speaker 634 and signals for transmission would be generated by a microphone 636. Alternative voice or audio I/O subsystems, such as a voice message recording subsystem, may also be implemented on mobile device 600. Although voice or audio signal output is generally accomplished primarily through the speaker 634, display **622** may also be used to provide an indication of the identity of a calling party, the duration of a voice call, or other voice call related information for example.

Serial port **630** in **Figure 6** would normally be implemented in a personal digital assistant (PDA)-type mobile device for which synchronization with a user's desktop computer (not shown) may be desirable, but is an optional device component. Such a port **630** would enable a user to set preferences through an external device or software application and would extend the capabilities of mobile device **600** by providing for information or software downloads to mobile device **600** other than through a wireless communication network. The alternate download path may for example be used to load an encryption key onto the device through a direct and thus reliable and trusted connection to thereby enable secure device communication. As will be appreciated by those skilled in the art, serial port **630** can further be used to connect the mobile device to a computer to act as a modem.

Other communications subsystems **640,** such as a short-range communications subsystem, is a further optional component which may provide for communication between mobile device **600** and different systems or devices, which need not necessarily be similar devices. For example, the subsystem **640** may include an infrared device and associated circuits and components or a Bluetooth™ communication module to provide for communication with similarly enabled systems and devices. Subsystem **640** may further include non-cellular communications such as WiFi or WiMAX, near field communications, among others.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method, at a computing device (110), for enabling recovery of an encryption key, the method comprising:
establishing, with a server (140), a public/private key pair, the public key being stored on the computing device (110) and the private key being stored on the server (140);
using a Password Key Derivation Function (PKDF) for computing a PKDF value,
based on a password at the computing device (110), the PKDF value being used to derive the encryption key;
encrypting the PKDF value with the public key;
storing the encrypted PKDF value; and
deleting the password and the PKDF value from memory (116) on the computing
device (110),
wherein the encrypted PKDF value is sent to the server (140) for decryption to recover the encryption key.

2. The method of claim 1, wherein the encryption key is used for encrypting and decrypting data in an encryption perimeter.

3. The method of any one of claims 1 to 2, wherein the PKDF is a one-way hash function.

4. The method of any one of claims 1 to 3, wherein the encryption key is derived by applying at least one cryptographic hash iteration to the PKDF value.

5. The method of any one of claims 1 to 4, wherein the encryption key is obtained by combining the PKDF value with device specific random data.

6. The method of any one of claims 1 to 5, wherein a secure channel is established with the server (140) using cryptographic credentials which are distinct from the password, the PKDF value, and the public and private key pair.

7. The method of any one of claims 1 to 6, wherein the computing device (110) is one of a smart phone, a tablet, and a personal computer.

8. A method, at a server (140), comprising:
establishing with a computing device (110), a public/private key pair, the public key being stored on the computing device (110) and the private key being stored on the server (140);
establishing a secure channel with the computing device (110);
receiving, via the secure channel, an encrypted Password Key Derivation Function (PKDF) value, the PKDF value being based on a password;
decrypting the encrypted PKDF value with the private key; and
sending the decrypted PKDF value to the computing device (110) via the secure channel;
wherein an encryption key on the computing device (110) is derivable from the decrypted PKDF value.

9. The method of claim 8, wherein the PKDF value comprises a hash of a password.

10. The method of claim 8 or claim 9, wherein the private key is uniquely associated with the computing device (110).

11. The method of any one of claims 8 to 10, wherein the secure channel is established with cryptographic credentials which are distinct from the password, the PKDF value, and the public and private key pair.

12. The method of any one of claims 8 to 11 further comprising, after receiving the encrypted PKDF value, sending a new password to the computing device (110) via the secure channel.

13. The method of any one of claims 8 to 12, further comprising, after the establishing of the secure channel, sending a request to the computing device, via the secure channel, for the encrypted PKDF value.

14. A computing device (110), comprising:
a communications subsystem (114);
a processor (112); and
memory (116);
wherein the computing device is adapted to perform the method of any one of claims 1 to 7.

15. A server (140), comprising:
a communications subsystem (142);
a microprocessor (144);
memory (146);
wherein the server is adapted to perform the method of any one of claims 8 to 13.

## Patentansprüche

1. Ein Verfahren, an einer Rechnervorrichtung (110), zum Ermöglichen einer Wiederherstellung eines Verschlüsselungsschlüssels, wobei das Verfahren umfasst:
Etablieren, mit einem Server (140), eines öffentlichen/privaten Schlüsselpaars, wobei der öffentliche Schlüssel auf der Rechnervorrichtung (110) gespeichert wird und der private Schlüssel auf dem Server (140) gespeichert wird;
Benutzen einer Passwortschlüsselableitungsfunktion (PKDF) zum Berechnen eines PKDF-Wertes, basierend auf einem Passwort an der Rechnervorrichtung (110), wobei der PKDF-Wert benutzt wird, um den Verschlüsselungsschlüssel abzuleiten;
Verschlüsseln des PKDF-Wertes mit dem öffentlichen Schlüssel;
Speichern des verschlüsselten PKDF-Wertes; und
Löschen des Passworts und des PKDF-Wertes aus einem Speicher (116) auf der Rechnervorrichtung (110),
wobei der verschlüsselte PKDF-Wert zu dem Server (140) zur Entschlüsselung gesendet wird, um den Verschlüsselungsschlüssel wiederherzustellen.

2. Das Verfahren nach Anspruch 1, wobei der Verschlüsselungsschlüssel genutzt wird zur Verschlüsselung und Entschlüsselung von Daten in einem Verschlüsselungsperimeter.

3. Das Verfahren nach einem der Ansprüche 1-2, wobei der PKDF eine One-Way- Hash-Funktion ist.

4. Das Verfahren nach einem der Ansprüche 1-3, wobei der Verschlüsselungsschlüssel abgeleitet wird durch Anwenden zumindest einer kryptographischen Hash-Iteration auf den PKDF-Wert.

5. Das Verfahren nach einem der Ansprüche 1-4, wobei der Verschlüsselungsschlüssel erhalten wird durch Kombinieren des PKDF-Wertes mit vorrichtungsspezifischen Zufallsdaten.

6. Das Verfahren nach einem der Ansprüche 1-5, wobei ein sicherer Kanal mit dem Server (140) etabliert wird unter Benutzung von kryptographischen Beglaubigungen, welche verschieden sind von dem Passwort, dem PKDF-Wert und dem öffentlichen und privaten Schlüsselpaar.

7. Das Verfahren nach einem der Ansprüche 1-6, wobei die Rechnervorrichtung (110) eine ist aus einem Smartphone, einem Tablet und einem Personalcomputer.

8. Ein Verfahren, an einem Server (140), umfassend:
Etablieren, mit einer Rechnervorrichtung (110), eines öffentlichen/privaten Schlüsselpaares, wobei der öffentliche Schlüssel auf der Rechnervorrichtung (110) gespeichert wird und der private Schlüssel auf dem Server (140) gespeichert wird;
Etablieren eines sicheren Kanals mit der Rechnervorrichtung (110);
Erhalten, mittels des sicheren Kanals, eines verschlüsselten Passwortschlüsselableitungsfunktion-PKDF-Wertes, wobei der PKDF-Wert auf einem Passwort basiert;
Entschlüsseln des verschlüsselten PKDF-Wertes mit dem privaten Schlüssel; und
Senden des entschlüsseln PKDF-Wertes an die Rechnervorrichtung (110) mittels des sicheren Kanals;
wobei ein Verschlüsselungsschlüssel auf der Rechnervorrichtung (110) ableitbar ist aus dem entschlüsselten PKDF-Wert.

9. Das Verfahren nach Anspruch 8, wobei der PKDF-Wert einen Hash eines Passwortes umfasst.

10. Das Verfahren nach Anspruch 8 oder 9, wobei der private Schlüssel eindeutig assoziiert ist mit der Rechnervorrichtung (110).

11. Das Verfahren nach einem der Ansprüche 8-10, wobei der sichere Kanal etabliert wird mit kryptographischen Beglaubigungen, welche verschieden sind von dem Passwort, dem PKDF-Wert und dem öffentlichen und privaten Schlüsselpaar.

12. Das Verfahren nach einem der Ansprüche 8-11 ferner umfassend, nach Erhalten des verschlüsselten PKDF-Wertes, ein Senden eines neuen Passworts an die Rechnervorrichtung (110) mittels des sicheren Kanals.

13. Das Verfahren nach einem der Ansprüche 8-12 ferner umfassend, nach dem Etablieren des sicheren Kanals, ein Senden einer Anforderung an die Rechnervorrichtung, mittels des sicheren Kanals, für den verschlüsselten PKDF-Wert.

14. Eine Rechnervorrichtung (110), umfassend:
ein Kommunikationssubsystem (114);
einen Prozessor (112); und
einen Speicher (116);
wobei die Rechnervorrichtung angepasst ist, um das Verfahren nach einem der Ansprüche 1-7 durchzuführen.

15. Ein Server (140), umfassend:
ein Kommunikationssubsystem (142);
einen Mikroprozessor (144);
einen Speicher (146);
wobei der Server angepasst ist, um das Verfahren nach einem der Ansprüche 8-13 durchzuführen.

## Revendications

1. Procédé, au niveau d'un dispositif informatique (110), pour permettre le recouvrement d'une clé de chiffrement, le procédé comprenant :
l'établissement, avec un serveur (140), d'une paire de clés publique/privée, la clé publique étant stockée sur le dispositif informatique (110) et la clé privée étant stockée sur le serveur (140) ;
l'utilisation d'une Fonction de dérivation de clé de mot de passe (PKDF) pour calculer une valeur PKDF, sur la base d'un mot de passe au niveau du dispositif informatique (110), la valeur PKDF étant utilisée pour dériver la clé de chiffrement ;
le chiffrement de la valeur PKDF avec la clé publique ;
le stockage de la valeur PKDF chiffrée ; et
la suppression du mot de passe et de la valeur PKDF d'une mémoire (116) sur le dispositif informatique (110),
dans lequel la valeur PKDF chiffrée est envoyée au serveur (140) pour le déchiffrement afin de recouvrer la clé de chiffrement.

2. Procédé selon la revendication 1, dans lequel la clé de chiffrement est utilisée pour chiffrer et déchiffrer des données dans un périmètre de chiffrement.

3. Procédé selon l'une quelconque des revendications 1 à 2, dans lequel la PKDF est une fonction de hachage unidirectionnelle.

4. Procédé selon l'une quelconque des revendications 1 à 3, dans lequel la clé de chiffrement est dérivée en appliquant au moins une itération de hachage cryptographique à la valeur PKDF.

5. Procédé selon l'une quelconque des revendications 1 à 4, dans lequel la clé de chiffrement est obtenue en combinant la valeur PKDF avec des données aléatoires spécifiques au dispositif.

6. Procédé selon l'une quelconque des revendications 1 à 5, dans lequel un canal sécurisé est établi avec le serveur (140) en utilisant un justificatif d'identité cryptographique qui est distinct du mot de passe, de la valeur PKDF, et la paire de clés publique et privée.

7. Procédé selon l'une quelconque des revendications 1 à 6, dans lequel le dispositif informatique (110) est l'un parmi un téléphone intelligent, une tablette, et un ordinateur personnel.

8. Procédé, au niveau d'un serveur (140), comprenant :
l'établissement avec un dispositif informatique (110), d'une paire de clés publique/privée, la clé publique étant stockée sur le dispositif informatique (110) et la clé privée étant stockée sur le serveur (140) ;
l'établissement d'un canal sécurisé avec le dispositif informatique (110) ;
la réception, via le canal sécurisé, d'une valeur de Fonction de dérivation de clé de mot de passe (PKDF) chiffrée, la valeur PKDF étant basée sur un mot de passe ;
le déchiffrement de la valeur PKDF chiffrée avec la clé privée ; et
l'envoi de la valeur PKDF déchiffrée au dispositif informatique (110) via le canal sécurisé ;
dans lequel une clé de chiffrement sur le dispositif informatique (110) est dérivable de la valeur PKDF déchiffrée.

9. Procédé selon la revendication 8, dans lequel la valeur PKDF comprend un hachage d'un mot de passe.

10. Procédé selon la revendication 8 ou la revendication 9, dans lequel la clé privée est associée de manière unique au dispositif informatique (110).

11. Procédé selon l'une quelconque des revendications 8 à 10, dans lequel le canal sécurisé est établi avec un justificatif d'identité cryptographique qui est distinct du mot de passe, de la valeur PKDF, et de la paire de clés publique et privée.

12. Procédé selon l'une quelconque des revendications 8 à 11, comprenant en outre, après la réception de la valeur PKDF chiffrée, l'envoi d'un nouveau mot de passe au dispositif informatique (110) via le canal sécurisé.

13. Procédé selon l'une quelconque des revendications 8 à 12, comprenant en outre, après l'établissement du canal sécurisé, l'envoi d'une demande au dispositif informatique, via le canal sécurisé, pour la valeur PKDF chiffrée.

14. Dispositif informatique (110), comprenant :
un sous-système de communications (114) ;
un processeur (112) ; et
une mémoire (116) ;
dans lequel le dispositif informatique est adapté pour effectuer le procédé selon l'une quelconque des revendications 1 à 7.

15. Serveur (140), comprenant :
un sous-système de communications (142) ;
un microprocesseur (144) ;
une mémoire (146) ;
dans lequel le serveur est adapté pour effectuer le procédé selon l'une quelconque des revendications 8 à 13.
